# EUROPÄISCHE PATENTSCHRIFT

(11) **EP 3 728 747 B1**
(45) Veröffentlichungstag und Bekanntmachung des Hinweises auf die Patenterteilung: **29.09.2021**
(21) Anmeldenummer: 18826504.5
(22) Anmeldetag: 04.12.2018
(51) Int. Cl.: E03D 3/10, E03D 1/14, E03D 1/34, F16K 31/08

(54) **VENTIL**
VALVE
VALVE

(30) Priorität: 19.12.2017 DE 102017130585
(43) Veröffentlichungstag der Anmeldung: 28.10.2020
(73) Patentinhaber: Viega Technology GmbH & Co. KG, 57439 Attendorn (DE)
(72) Erfinder: ARNDT, Johannes, 57439 Attendorn (DE); ROTHSTEIN, Gerhard, 42553 Velbert (DE); WESSEL, Heinz-Werner, 58840 Plettenberg (DE)
(74) Vertreter: Cohausz & Florack
(86) Internationale Anmeldenummer: PCT/EP2018/083394
(87) Internationale Veröffentlichungsnummer: WO 2019/120972

(56) Entgegenhaltungen:
- EP-A1- 2 392 844
- EP-A2- 0 126 385
- WO-A2-03/106774
- DE-A1- 10 315 926

## Beschreibung

Die Erfindung betrifft ein Ablaufventil für einen sanitären Spülkasten, insbesondere Unterputzspülkasten, mit einem eine Ablauföffnung aufweisenden Ventilgehäuse, wobei die Ablauföffnung durch einen Ventilsitz begrenzt ist, und mit einem im geschlossenen Zustand des Ablaufventils auf dem Ventilsitz dichtend aufliegenden Ventilkörper, wobei das Ventilgehäuse eine dem Ventilsitz in Abflussrichtung vorgeordnete Gehäusekammer zur Aufnahme von Wasser aufweist.

Spülkästen für WC- oder Urinalbecken sind in verschiedensten Ausführungen bekannt. Herkömmliche sanitäre Spülkästen, insbesondere Unterputzspülkästen, weisen einen Kastenkörper auf, in dessen Vorderwand oder Oberseite eine Revisionsöffnung ausgebildet ist. Funktionsteile, wie Ablaufventil und Füllventil, werden über die Revisionsöffnung im Kastenkörper montiert. Die Revisionsöffnung wird üblicherweise mit einer Betätigungsplatte kombiniert, die eine oder zwei beweglich gelagerte Bedientasten zur Auslösung einer Wasserspülung aufweist. Zu Wartungs- und Reparaturzwecken ermöglicht die Revisionsöffnung einen Zugang zu den im Kastenkörper montierten Funktionsteilen.

Insbesondere aus ästhetischen Gründen werden die Betätigungsplatten von Unterputzspülkästen regelmäßig relativ klein ausgeführt. Dementsprechend begrenzt sind die Abmessungen der Revisionsöffnungen. Der Einbau der im Kastenkörper anzuordnenden Funktionsteile gestaltet sich wegen der kleinen Revisionsöffnungen vergleichsweise schwierig.

In der DE 20 2007 017 789 U1 wie auch in der WO02/077 377 A2 wird ein Unterputzspülkasten für ein WC- oder Urinalbecken mit einem Füllventil, einem Ablaufventil, einem Spülrohr und einer elektrischen Betätigungseinrichtung zur Auslösung einer Spülung vorgeschlagen, bei dem unterhalb des Spülwasser aufnehmenden Kastenkörpers ein Anschlussraum oder Gehäuse zur Aufnahme einer elektrischen Steuerung und eines absperrbaren Wasseranschlusses angeordnet ist, wobei der Anschlussraum oder das Gehäuse an seiner Vorderseite eine Revisionsöffnung aufweist, die so bemessen und angeordnet ist, dass sie nach der Montage des WC- oder Urinalbeckens durch letzteres verdeckt ist.

Der aus der DE 20 2007 017 789 U1 bekannte Unterputzspülkasten basiert auf der Erkenntnis, dass die Rückseite eines WC-Beckens üblicherweise eine erheblich größere Wandfläche abdeckt als eine dem WC-Becken zugeordnete herkömmliche Betätigungsplatte zur Auslösung einer Wasserspülung. Eine durch das WC-Becken unsichtbar abdeckbare Revisionsöffnung eines unterhalb des Unterputzspülkastens angeordneten Anschlussraums oder Gehäuses lässt sich daher erheblich größer ausführen als eine Revisionsöffnung eines Unterputzspülkastens, die oberhalb des WC-Beckens angeordnet ist und mit einer herkömmlichen Betätigungsplatte abgedeckt wird. Die größere Revisionsöffnung erleichtert den Anschluss und die Montage von Funktionsteilen des Unterputzspülkastens. Der Unterputzspülkasten erfordert für seine Inbetriebnahme keine Montagearbeiten innerhalb seines das Spülwasser aufnehmenden Kastenkörpers. Der Kastenkörper kann daher geschlossen, d.h. ohne Revisionsöffnung ausgebildet werden. Dementsprechend kann dann eine übliche Betätigungsplatte, welche im montierten Zustand eine oberhalb des WC-Beckens angeordnete Revisionsöffnung des Unterputzspülkastens abdeckt, weggelassen werden. Dieser bekannte Unterputzspülkasten ermöglicht somit eine ununterbrochene Wandflächengestaltung oberhalb des WC-Beckens, wodurch sich ein besonderes Design erzielen lässt. Beispielsweise lässt sich die Wandfläche oberhalb des WC-Beckens nun mit einem durchgängigen Wandbelag verkleiden, ohne dass der Wandbelag einen Ausschnitt für eine sonst übliche Betätigungsplatte beinhaltet.

Eine mechanische Betätigungseinrichtung zur Auslösung einer Spülung ist bei dem aus der DE 20 2007 017 789 U1 bekannten Unterputzspülkasten nicht vorgesehen. Vielmehr sind eine elektrische Betätigungseinrichtung und eine elektrische Steuerung vorgesehen, mittels denen ein elektrischer Stellantrieb betätigt wird, der das Ablaufventil öffnet und schließt. Das Ablaufventil weist dabei als Ventilkörper eine Kugel oder eine drehbare Klappe auf.

Der vorliegenden Erfindung liegt die Aufgabe zugrunde, ein Ablaufventil der eingangs genannten Art zu schaffen, das außerhalb des Spülkastens angeordnet werden kann und für seine Wartung sowie Demontage über eine durch ein WC- oder Urinalbecken verdeckbare Revisionsöffnung zugänglich ist.

Diese Aufgabe wird durch ein Ablaufventil mit den in Anspruch 1 angegebenen Merkmalen gelöst. Bevorzugte und vorteilhafte Ausgestaltungen des erfindungsgemäßen Ablaufventils sind in den Unteransprüchen angegeben.

Das erfindungsgemäße Ablaufventil ist dadurch gekennzeichnet, dass das Ventilgehäuse die Gehäusekammer zur Aufnahme von Wasser aufweist, wobei die Gehäusekammer dem ventilsitz in Abflussrichtung vorgeordnet ist, wobei das Ventilgehäuse einen Anschlussstutzen aufweist, der ausgebildet ist, um das Ablaufventil an einen mit dem Spülkasten verbundenenen Spülrohrstutzen oder an eine mit dem Spülkasten verbundene Spülrohrleitung anzuschließen, und dass der Ventilkörper mit dem flexiblen und / oder beweglichen Wandabschnitt der Nebenkammer verbunden ist.

Das erfindungsgemäße Ablaufventil kann außerhalb, insbesondere unterhalb des Spülkastens angeordnet werden. Die Wartung sowie Demontage des Ablaufventils kann über eine durch ein WC- oder Urinalbecken verdeckbare Revisionsöffnung erfolgen. Die Revisionsöffnung kann hierzu in einer Vorwand, in welcher der Spülkasten aufgenommen ist, so angeordnet werden, dass das Ablaufventil nach einer Demontage des WC- oder Urinalbeckens zumindest mit einem am Ventilgehäuse angebrachten, vorzugsweise einstückig angeformten Ablaufrohrstück in die Revisionsöffnung ragt. Das erfindungsgemäße Ablaufventil bietet somit mehr bzw. neue Freiheitsgrade bei der Gestaltung von Toilettenräumen und Badezimmern. Durch die Steuerung des Ablaufventils über das Ablauf-Nebenventil lassen sich eine leichtgängige Betätigung des Ablaufventils sowie eine zuverlässige Funktion desselben erzielen.

Das erfindungsgemäße Ablaufventil bietet gegenüber herkömmlichen Spülkasten-Ablaufventilen zudem den Vorteil, dass die zur Betätigung des Ablauf-Nebenventils und damit die zur Betätigung des Ablaufventils erforderlichen Kräfte relativ gering sind.

Das erfindungsgemäße Ablaufventil ist insbesondere für eine Anordnung außerhalb eines sanitären Spülkastens geeignet; es kann aber auch innerhalb eines sanitären Spülkastens eingesetzt werden.

Die in dem Ventilgehäuse des erfindungsgemäßen Ablaufventils vorhandene Gehäusekammer zur Aufnahme von Wasser, in welcher der Ventilkörper angeordnet ist, kann auch als Hauptkammer bezeichnet werden. Dementsprechend können der in der Hauptkammer angeordnete Ventilkörper auch als Hauptventilkörper und das von dem Ventilkörper und dem ihm zugeordneten Ventilsitz gebildete Ventil als Hauptventil bezeichnet werden. Dieses Hauptventil lässt sich erfindungsgemäß mittels des Ablauf-Nebenventils steuern. Hierzu ist der Ventilkörper (Hauptventilkörper) mit der Nebenkammer zur Aufnahme von Wasser versehen, deren Wasseraufnahmevolumen im geöffneten Zustand des Hauptventils kleiner ist als im geschlossenen Zustand des Hauptventils. Das Aufnahmevolumen der Nebenkammer ist somit veränderlich. Die die Nebenkammer begrenzende Wandung weist hierzu einen flexiblen und/oder beweglichen Wandabschnitt auf, der vorzugsweise in Form eines Faltenbalgs ausgeführt ist. Nach einer weiteren vorteilhaften Ausgestaltung ist der flexible und/oder bewegliche Wandabschnitt formstabilsiert ausgeführt. Hierzu ist er beispielsweise mit einem oder mehreren sich mit bewegenden Stützringen versehen, der bzw. die vorzugsweise an seiner Innenseite angeordnet sind.

Das der Nebenkammer zugeordnete Ablauf-Nebenventil ist so ausgestaltet, dass es in einer ersten Stellung ein Zufließen von Wasser in die Nebenkammer und in einer zweiten Stellung ein Abfließen von Wasser aus der Nebenkammer ermöglicht. Das in die Nebenkammer einfließende Wasser fließt dabei vorzugsweise über das Ablauf-Nebenventil in die Nebenkammer. Das aus der Nebenkammer abfließende Wasser fließt vorzugsweise ebenfalls über das Ablauf-Nebenventil aus der Nebenkammer ab. Im Vergleich zu dem Hauptventil kann das Ablauf-Nebenventil mit relativ kleinen Abmessungen verwirklicht werden.

Durch das in die Nebenkammer einfließende Wasser nimmt deren Volumen zu, so dass der mit dem flexiblen und/oder beweglichen Wandabschnitt der Nebenkammer verbundene Ventilkörper (Hauptventilkörper) in Richtung Ventilsitz bewegt wird, um das Hauptventil bzw. den Ablauf zu schließen. Im geschlossenen Zustand des Ablaufs sind der Wasserdruck in der Ablaufgehäusekammer (Hauptkammer) und der Wasserdruck in der Nebenkammer im Wesentlichen gleich groß. Da dabei die vom in der Hauptkammer befindlichen Wasser beaufschlagte Fläche des Ventilkörpers (Hauptventilkörpers) kleiner ist als die vom in der Nebenkammer befindlichen Wasser beaufschlagte Ventilkörperfläche, wird der Ventilkörper gegen den Ventilsitz gedrückt, wodurch sich ein wirksamer Verschluss des Ablaufs (Hauptventils) ergibt.

Zum Öffnen des Hauptventils bzw. Ablaufs wird das Ablauf-Nebenventil, das auch kurz als Nebenventil bezeichnet werden kann, in die zweite Stellung bewegt, in welcher ein Abfließen von Wasser aus der Nebenkammer freigegeben wird. Gleichzeitig wird ein weiteres Zufließen von Wasser in die Nebenkammer zumindest soweit unterbunden, dass der aus der Nebenkammer abfließende Wasservolumenstrom größer ist als der in die Nebenkammer einfließende Wasservolumenstrom. Dadurch verringert sich der Wasserdruck in der Nebenkammer gegenüber dem Wasserdruck in der Hauptkammer, mit der Folge, dass der Ventilkörper vom Ventilsitz wegbewegt und der flexible und/oder bewegliche Wandabschnitt der Nebenkammer komprimiert bzw. ineinander geschoben werden.

Wie oben bereits erwähnt, ist der flexible und/oder bewegliche Wandabschnitt der Nebenkammer vorzugsweise in Form eines Faltenbalgs ausgeführt. Anstelle eines Faltenbalgs kann jedoch auch beispielsweise eine Rollmembran und/oder eine teleskopartig ausgeführte Wandkonstruktion zur Verwirklichung des flexiblen und/oder beweglichen Wandabschnitts verwendet werden. Die zueinander teleskopartig verschiebbaren Wandsegmente können dabei beispielsweise durch eine flexible, ringförmige Dichtungsmembran verbunden sein.

Eine weitere bevorzugte Ausgestaltung der Erfindung sieht vor, dass die Nebenkammer teilweise durch einen kappenförmigen Gehäuseabschnitt begrenzt ist. Der kappenförmige Gehäuseabschnitt ermöglicht eine zuverlässige räumliche Ausrichtung und Festlegung der Nebenkammer innerhalb der größeren Gehäusekammer des Ablaufgehäuses. Der kappenförmige Gehäuseabschnitt der Nebenkammer ist beispielsweise als Spritzgießteil aus Kunststoff, vorzugsweise Hartkunststoff gefertigt.

Nach einer weiteren bevorzugten Ausgestaltung der Erfindung ist der kappenförmige Gehäuseabschnitt mit einem manschettenartigen Kragen versehen. Mit einem solchen Kragen lässt sich ein Faltenbalg in zuverlässiger Weise mit dem kappenförmigen Gehäuseabschnitt flüssigkeitsdicht verbinden, wobei der Kragen zugleich eine Führungs- und Schutzfunktion in Bezug auf den Faltenbalg übernehmen kann, wenn dieser beim Öffnen des Ablaufventils komprimiert wird.

Eine weitere vorteilhafte Ausgestaltung der Erfindung ist dadurch gekennzeichnet, dass der Ventilkörper einen Ventilschaft aufweist, der in einer hülsenförmigen Aufnahme verschiebbar geführt ist, die mit einem oberen Wandabschnitt der Nebenkammer verbunden ist. Hierdurch kann trotz des flexiblen und/oder beweglichen Wandabschnitts der Nebenkammer dauerhaft eine zuverlässige Ausrichtung des Ventilkörpers in Bezug auf den Ventilsitz sichergestellt werden. Die hülsenförmige Aufnahme kann dabei vorzugsweise durch den kappenförmigen Gehäuseabschnitt gehalten sein, beispielsweise indem die hülsenförmige Aufnahme und der kappenförmige Gehäuseabschnitt einteilig ausgeführt oder stoffschlüssig miteinander verbunden sind.

Eine weitere Ausgestaltung der Erfindung sieht vor, dass der Ventilkörper einen Randabschnitt aufweist, der den Ventilsitz seitlich überragt und im geschlossenen Zustand des Ablaufventils mit dem Boden der Gehäusekammer einen Spalt begrenzt. Durch diesen Spalt kann der in der Gehäusekammer (Hauptkammer) auftretende Wasserdruck zuverlässig auf eine den Ventilsitz seitlich überragende Randfläche des Ventilkörpers einwirken, um bei Abfließen von Wasser aus der Nebenkammer infolge einer entsprechenden Betätigung des Ablauf-Nebenventils ein Abheben des Ventilkörpers vom Ventilsitz und damit ein Öffnen des Ablaufventils (Hauptventils) zu gewährleisten.

Zur Erzielung einer guten bzw. hohen Spülleistung ist es vorteilhaft, wenn nach einer weiteren Ausgestaltung der Ventilkörper eine Spülwasserumlenkfläche aufweist, die im geschlossenen Zustand des Ablaufventils in die durch den Ventilsitz begrenzte Ablauföffnung hineinragt. Die Spülwasserumlenkfläche des Ventilkörpers kann beispielsweise in Form eines rotationssymmetrisch umlaufenden konkaven Bogens oder in Form eines Kegels ausgeführt sein. Entsprechend der Erfindung weist das Ventilgehäuse des Ablaufventils einen Anschlussstutzen auf, der ausgebildet ist, um das Ablaufventil an einen mit dem Spülkasten verbundenen Spülrohrstutzen oder an eine mit dem Spülkasten verbundene Spülrohrleitung anzuschließen. Der Anschlussstutzen ermöglicht eine einfache und schnelle Demontage sowie Montage des Ablaufventils. Der Anschlussstutzen weist vorzugsweise ein im Wesentlichen ovales oder ellipsenförmiges Rohrprofil auf und stellt so einen guten Kompromiss zwischen Bauraumbedarf und Strömungseigenschaften dar. Der Anschlussstutzen ist vorzugsweise mit einem Dichtring versehen, der in einer an dem Anschlussstutzen ausgebildeten umlaufenden Nut (Ringnut) gehalten ist.

Das Ablauf-Nebenventil des erfindungsgemäßen Ablaufventils ist nach einer weiteren Ausgestaltung der Erfindung in einer Bypass-Leitung angeordnet, welche die vom Ventilsitz begrenzte Ablauföffnung überbrückt. Die Bypass-Leitung umfasst vorzugsweise zwei oder mehrere Rohrabschnitte, die durch eine flüssigkeitsdichte Steckverbindung miteinander verbunden sind. Entsprechend dem Ventilgehäuse des Ablaufventils weist vorzugsweise auch die Bypass-Leitung einen Anschlussstutzen auf, der ausgebildet ist, um die Bypass-Leitung an einen mit dem Spülkasten verbundenen Rohrstutzen oder an eine mit dem Spülkasten verbundene Rohrleitung anzuschließen.

In diesem Zusammenhang sieht eine weitere Ausgestaltung vor, dass die Bypass-Leitung in ein Ablaufrohrstück mündet, welches in Abflussrichtung auf den Ventilsitz folgt. Das aus der Nebenkammer bei entsprechender Betätigung des Ablauf-Nebenventils abfließende Wasser gelangt somit in das Ablaufrohrstück. Die Demontage sowie Montage des erfindungsgemäßen Ablaufventils wird durch diese Ausgestaltung weiter erleichtert. Das Ablaufrohrstück kann unmittelbar oder über ein Übergangsrohrstück mit dem Spülwasseranschluss eines WC- oder Urinalbeckens verbunden werden. Vorzugsweise ist das Ablaufrohrstück in Form eines eine Anschlussmuffe aufweisenden Rohrwinkels oder Rohrbogens ausgebildet.

Nach einer weiteren Ausgestaltung des erfindungsgemäßen Ablaufventils weist das Ablaufrohrstück einen Anschluss für ein Überlaufrohr auf. Durch das Überlaufrohr und den an dem auf das Hauptventil folgenden Ablaufrohrstück vorgesehenen Überlaufrohr-Anschluss wird sichergestellt, dass bei einer ununterbrochenen Wasserzufuhr in den Spülkasten, z.B. aufgrund eines Defektes des Füllventils, ein Überlaufen des Spülkastens und damit ein Wasserschaden verhindert werden.

Nach einer alternativen Ausgestaltung des erfindungsgemäßen Ablaufventils kann anstelle des Ablaufrohrstückes die Bypass-Leitung einen Anschluss für ein Überlaufrohr aufweisen, wobei der Überlaufrohr-Anschluss in diesem Fall in Abflussrichtung auf das Ablauf-Nebenventil folgt.

Eine weitere vorteilhafte Ausgestaltung des erfindungsgemäßen Ablaufventils ist dadurch gekennzeichnet, dass das Ablauf-Nebenventil einen schwenkbar gelagerten Ventilkörper aufweist, der mit einer Magnetkupplung versehen ist, deren sich wechselseitig anziehenden Kupplungselemente auf gegenüberliegenden Seiten einer Gehäusewand eines geschlossenen Gehäuses, welches einen Aufnahmeraum des schwenkbaren Ventilkörpers des Nebenventils begrenzt, angeordnet sind. Die auf den sich gegenüberliegenden Seiten des geschlossenen Gehäuses angeordneten Kupplungselemente der Magnetkupplung sind somit leckagefrei miteinander verbunden. Hierdurch wird eine abzudichtende Durchgangsöffnung in der Gehäusewand des Ablaufventils, die der Durchleitung eines beweglichen Stellelements, z.B. einer Welle oder Stellachse, dient und damit das Risiko eines Wasserschadens aufgrund eines möglichen Defektes in der erforderlichen Abdichtung der Durchgangsöffnung vermieden. Im Ergebnis wird durch diese Ausgestaltung eine leckagefreie Ansteuerung des Ablaufventils sichergestellt.

Nachfolgend wird die Erfindung anhand einer ein Ausführungsbeispiel darstellenden Zeichnung näher erläutert. Es zeigen:
- Fig. 1: ein erfindungsgemäßes Ablaufventil in geschlossenem Zustand, in einer Vorderansicht;
- Fig. 2: das Ablaufventil aus Fig. 1 in einer Draufsicht;
- Fig. 3: das Ablaufventil in einer Schnittansicht entlang der Schnittlinie A-A in Fig. 2;
- Fig. 4: das Ablaufventil in einer Schnittansicht entlang der Schnittlinie B-B in Fig. 3;
- Fig. 5: das Ablaufventil in einer Schnittansicht entlang der Schnittlinie D-D in Fig. 3;
- Fig. 6: das Ablaufventil in geöffnetem Zustand in einer Schnittansicht entlang der Schnittlinie A-A in Fig. 2; und
- Fig. 7: das Ablaufventil in geöffnetem Zustand in einer Schnittansicht entlang der Schnittlinie D-D in Fig. 3.

Das in der Zeichnung dargestellte Ablaufventil 1 ist für eine Kombination mit einem sanitären Spülkasten (nicht gezeigt), insbesondere einem Unterputzspülkasten bestimmt. Herkömmliche Ablaufventile für sanitäre Spülkästen sind innerhalb des Spülkastens angeordnet und für Wartungs- oder Reparaturzwecke über eine oberhalb des WC- oder Urinalbeckens angeordnete Revisionsöffnung zugänglich.

Das erfindungsgemäße Ablaufventil 1 ist dagegen so ausgeführt, dass es im montierten Zustand unterhalb und damit außerhalb des Spülkastens angeordnet ist. Das Ablaufventil 1 ermöglicht somit eine Verlegung der bei herkömmlichen Unterputzspülkästen oberhalb des WC- oder Urinalbeckens angeordneten Revisionsöffnung an eine Stelle, die hinter dem WC- oder Urinalbecken liegt, so dass die Revisionsöffnung durch das WC- oder Urinalbecken vollständig verdeckt wird.

Das Ablaufventil 1 hat ein geschlossenes Ventilgehäuse (Ablaufventilgehäuse) 2, das mit einer Eingangsöffnung 3 und einer Ablauföffnung 4 versehen ist. Die Eingangsöffnung 3 ist durch einen Anschlussstutzen 5 definiert, der vorzugsweise an der Oberseite des Ventilgehäuses 2 angeordnet ist. Über den Anschlussstutzen 5 kann das Ablaufventil 1 an einen mit dem Spülkasten verbundenen Spülrohrstutzen oder an eine mit dem Spülkasten verbundene Spülrohrleitung angeschlossen werden.

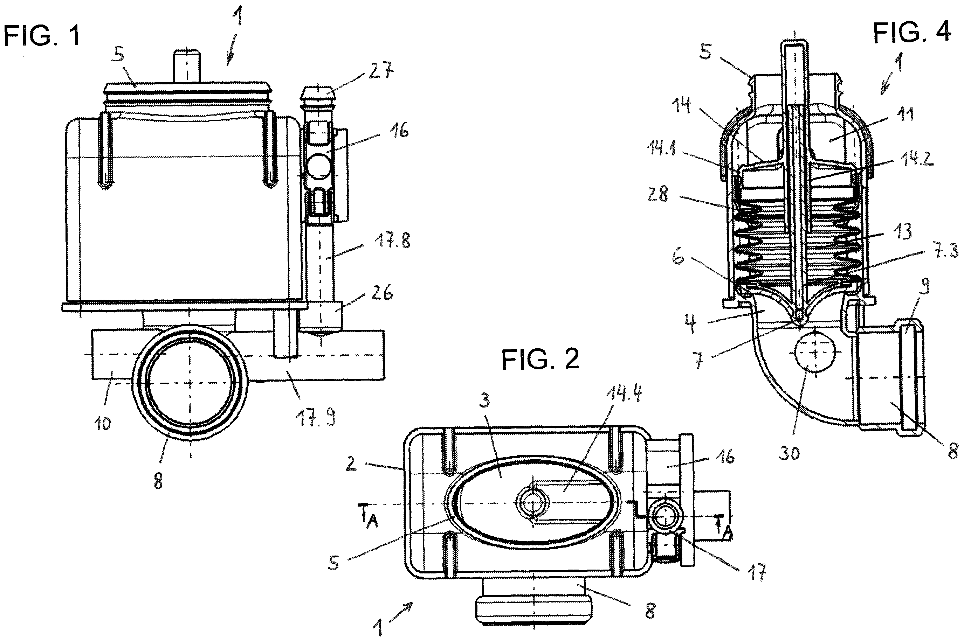

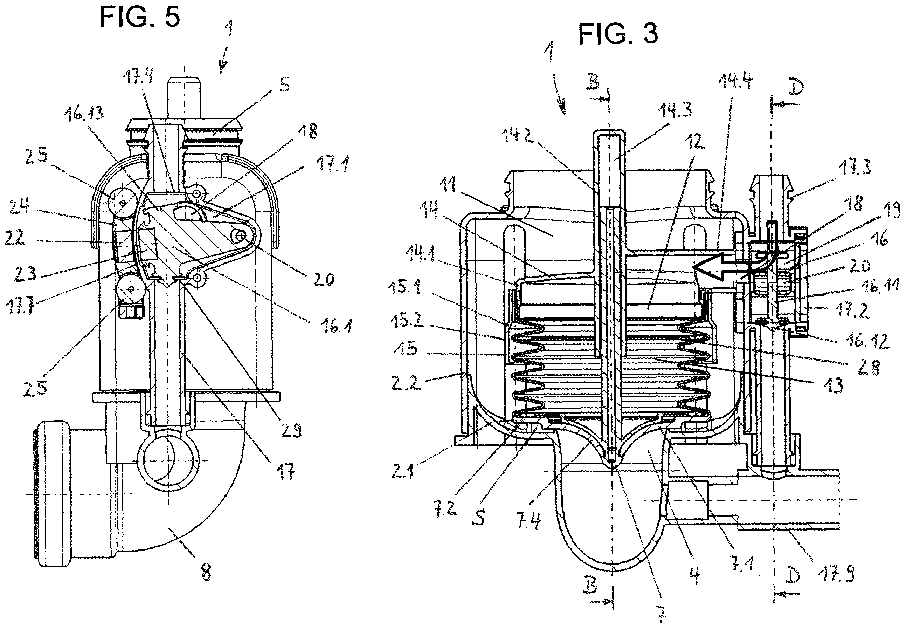

Die Ablauföffnung 4 ist durch einen Ventilsitz 6 begrenzt. Der Ventilsitz 6 ist in Form eines ringförmig, vorzugsweise kreisringförmigen Vorsprungs ausgebildet, der in das Innere des Ventilgehäuses 2 geringfügig vorsteht. Mit 7 ist ein Ventilkörper bezeichnet, der im geschlossenen Zustand des Ablaufventils 1 auf dem Ventilsitz 6 dichtend aufliegt (vgl. Fig. 3 und 4).

An den Ventilsitz 6 schließt sich in Abflussrichtung ein Ablaufrohrstück 8 an, das vorzugsweise in Form eines Rohrwinkels ausgebildet ist. Das Ende des Ablaufrohrstücks 8 kann unmittelbar mit dem Spülwasseranschluss (nicht gezeigt) eines WC- oder Urinalbeckens verbunden werden. Das Ende des Ablaufrohrstückes 8 ist hierzu beispielsweise in Form einer Anschlussmuffe ausgebildet, die innenseitig eine Ringnut 9 zur Aufnahme eines Dichtungsringes aufweist.

Mit 10 ist ein in das Ablaufrohrstück 8 mündender Rohrstutzen bezeichnet, der als Anschluss für ein an einer Überlauföffnung des Spülkastens angeschlossenes Überlaufrohr (nicht gezeigt) dient.

Das Ventilgehäuse 2 definiert eine dem Ventilsitz 6 in Abflussrichtung vorgeordnete Gehäusekammer 11. Die Gehäusekammer 11 dient der Aufnahme des Ventilkörpers 7 sowie der Aufnahme von Wasser. Das Ventilgehäuse 2 ist aus einem unteren Gehäuseteil 2.1 und einem oberen Gehäuseteil 2.2 zusammengesetzt, die flüssigkeitsdicht miteinander verbunden sind. Das untere Gehäuseteil 2.1 umfasst die Ablauföffnung 4 mit dem Ventilsitz 6 und das Ablaufrohrstück 8, während das obere Gehäuseteil 2.2 den Anschlussstutzen 5 mit der Eingangsöffnung 3 umfasst. Das Ventilgehäuse 2 ist vorzugsweise im Wesentlichen kastenförmig ausgebildet, wobei seine Vorderseitenfläche als auch seine Rückseitenfläche deutlich breiter sind als seine jeweilige Seitenfläche. Das Ventilgehäuse 2 besitzt somit vorzugsweise einen im Wesentlichen rechteckigen Grundriss (vgl. Fig. 2). Der am oberen Gehäuseteil 2.2 einstückig angeformte Anschlussstutzen 5 weist ein im Wesentlichen ovales oder ellipsenförmiges Rohrprofil auf. Die Hauptachse des Rohrprofils verläuft parallel zu der Vorderseite und der Rückseite des Gehäuseteils 2.2.

Der Ventilkörper 7 ist mit einer Nebenkammer 12 zur Aufnahme von Wasser versehen. Die Nebenkammer 12 ist teilweise durch einen flexiblen und beweglichen Wandabschnitt 13 begrenzt, so dass ihr Wasseraufnahmevolumen veränderlich ist. Der flexible und bewegliche Wandabschnitt 13 ist formstabilisiert. Er weist hierzu beispielsweise einen oder mehrere sich mit bewegenden Stützringe 28 auf, die an seiner Innenseite angeordnet sind. In dem dargestellten Ausführungsbeispiel ist der flexible und bewegliche Wandabschnitt 13 durch einen Faltenbalg gebildet. Der Faltenbalg 13 ist beispielsweise aus gummielastischem Material oder aus Kunststoff gefertigt.

Des Weiteren ist die Nebenkammer 12 teilweise durch einen kappenförmigen Gehäuseabschnitt 14 begrenzt. Der kappenförmige Gehäuseabschnitt 14 weist einen dem Ventilsitz 6 zugewandten Kragen 14.1 auf, welcher der flüssigkeitsdichten Anbindung des oberen Endes des Faltenbalgs 13 dient. Zudem ist der kappenförmige Gehäuseabschnitt 14 mit einem manschettenartigen Kragen 15 versehen. Der Kragen 15 endet mit Abstand oberhalb des Ventilsitzes 6. Der manschettenartige Kragen 15 umschließt das obere Ende des Faltenbalgs 13 und ist mit dem Kragen 14.1 des kappenförmigen Gehäuseabschnittes 14 unmittelbar und/oder über den Faltenbalg 13 verbunden. Optional weist der Kragen 15 unterhalb seines oberen Verbindungsabschnitts einen beispielsweise konisch geformten Übergangsabschnitt 15.1 und einen sich daran anschließenden durchmessererweiterten Abschnitt 15.2 auf. Der durchmessererweiterte Abschnitt 15.2 umgreift die Außenseite des Faltenbalgs 13 mit Spiel.

Das untere Ende des Faltenbalgs 13 ist mit einem tellerförmigen Abschnitt 7.1 des Ventilkörpers 7 flüssigkeitsdicht verbunden. Der tellerförmige Abschnitt 7.1 weist einen Randabschnitt 7.2 auf, der den Ventilsitz 6 seitlich überragt und im geschlossenen Zustand des Ablaufventils 1 mit dem Boden der Gehäusekammer 2 einen Spalt S begrenzt. Der Randabschnitt 7.2 ist gegenüber dem den Ventilsitz 6 berührenden Ventilkörperabschnitt um wenige Millimeter axial versetzt ausgebildet (Fig. 3).

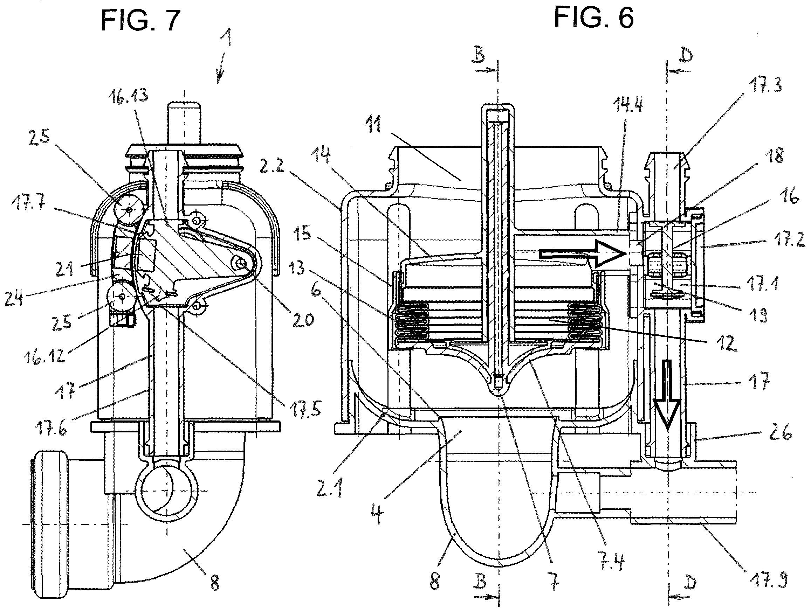

Des Weiteren weist der Ventilkörper 7 vorzugsweise einen Ventilschaft 7.3 auf, der in einer hülsenförmigen Aufnahme 14.2 verschiebbar geführt ist. Die Aufnahme (Führung) 14.2 ist mit dem kappenförmigen Gehäuseabschnitt 14 bzw. oberen Wandabschnitt der Nebenkammer 12 verbunden. Das obere, geschlossene Ende der hülsenförmigen Führung 14.2 steht gegenüber der Oberseite des kappenförmigen Gehäuseabschnitts 14 vor und erstreckt sich beispielsweise über den Anschlussstutzen 5 hinaus in Richtung des (nicht gezeigten) Spülkastens. Das untere, offene Ende der Führung 14.2 ragt in den Faltenbalg 13 hinein und endet vorzugsweise oberhalb der Unterkante des Kragens 15 (vgl. Fig. 3 und 6). Der zylindrische Ventilschaft 7.3 ist vorzugsweise rohrförmig ausgebildet und zu dem Hohlraum 14.3 in der hülsenförmigen Führung 14.2 hin offen.

Der tellerförmige Abschnitt 7.1 des Ventilkörpers weist eine Spülwasserumlenkfläche 7.4 auf, die im geschlossenen Zustand des Ablaufventils 1 in die durch den Ventilsitz 6 begrenzte Ablauföffnung 4 ragt. Die Spülwasserumlenkfläche 7.4 ist hier beispielsweise in Form eines rotationssymmetrisch umlaufenden konkaven Bogens ausgebildet.

Der Nebenkammer 12 ist ein Ablauf-Nebenventil 16 zugeordnet, welches in einer ersten Stellung ein Zufließen von Wasser in die Nebenkammer 12 und in einer zweiten Stellung ein Abfließen von Wasser aus der Nebenkammer 12 gestattet. Das Ablauf-Nebenventil 16 ist in einer Bypass-Leitung 17 angeordnet, welche den Ventilsitz 6 bzw. die dort befindliche Ablauföffnung 4 überbrückt. Die Bypass-Leitung 17 ist eingangsseitig am Spülkasten angeschlossen und mündet in das Ablaufrohrstück 8, welches in Abflussrichtung auf den Ventilsitz 6 folgt. Die Mündung 30 der Bypass-Leitung 17 im Ablaufrohrstück 8 ist in Fig. 4 zu erkennen.

Das Ablauf-Nebenventil 16 enthält einen Ventilkörper 16.1, der in einem in der Bypass-Leitung 17 ausgebildeten Aufnahmeraum 17.1 schwenkbar gelagert ist. Der Aufnahmeraum 17.1, der auch als Ventilkammer bezeichnet werden kann, ist über einen Kanal oder Durchgang 18 mit der Nebenkammer 12 hydraulisch verbunden. Der Durchgang 18 mündet in den kappenförmigen Gehäuseabschnitt 14 der Nebenkammer 12 bzw. in einen an dem kappenförmigen Gehäuseabschnitt vorgesehenen Anschlussstutzen 14.4. Die Bypass-Leitung 17 weist im Bereich der Ventilkammer 17.1 einen Flüssigkeit abdichtenden Deckel 17.2 auf.

Der Ventilkörper 16.1 des Nebenventils 16 weist einen relativ dünnen stegförmigen Hebelabschnitt 16.11 auf, der beidseitig von der Ventilkammerwandung bzw. dem Deckel 17.2 beabstandet ist und somit Wasserdurchgänge 19 begrenzt. An seinem der Schwenkachse 20 abgewandten Ende ist der Ventilkörper 16.1 mit einem unteren bzw. ersten Ventilkopf 16.12 versehen, welcher in einer Schließstellung des Nebenventils 16 die Bypass-Leitung 17 in der Weise absperrt, dass der Ventilkammer 17.1 über den oberen Bypass-Leitungsabschnitt 17.3 aus dem Spülkasten zulaufendes Wasser in die Nebenkammer 12 läuft. Des Weiteren ist der Ventilkörper 16.1 an seinem der Schwenkachse 20 abgewandten Ende mit einem oberen bzw. zweiten Ventilkopf 16.13 versehen, welcher in einer Offenstellung des Nebenventils 16 die Einlauföffnung 17.4 der Ventilkammer 17.1 verschließt, so dass aus der Nebenkammer 12 abfließendes Wasser nicht in den oberen Bypass-Leitungsabschnitt 17.3, sondern in die Ablauföffnung 17.5 der Ventilkammer 17.1 und somit in den unteren Bypass-Leitungsabschnitt 17.6 fließt. Der untere bzw. erste Ventilkopf 16.12 ist vorzugsweise mit einer gummielastischen Ringdichtung 29 versehen. Der obere bzw. zweite Ventilkopf 16.13 benötigt dagegen eine solche Dichtung nicht.

Der Ventilkörper 16.1 des Nebenventils 16 ist mit einer Magnetkupplung 21 versehen. Die sich einander anziehenden Elemente 22, 23 der Magnetkupplung 21 sind auf gegenüberliegenden Seiten einer Gehäusewand 17.7 angeordnet, welche den Aufnahmeraum (Ventilkammer) 17.1 des Ventilkörpers 16.1 begrenzt. Die Gehäusewand 17.7 ist kreisbogensegmentförmig ausgebildet. Der außerhalb des Aufnahmeraums 17.1 angeordnete Magnet 22 oder ein magnetisches Element ist an einem verschiebbaren Schlitten oder Wagen 24 befestigt. Mit 25 sind Laufrollen des Wagens 24 bezeichnet. Der innerhalb des Aufnahmeraums 17.1 angeordnete Magnet 23 bzw. ein von dem äußeren Magneten 22 angezogenes Element ist an dem von der Schwenkachse 20 weiter beabstandeten Ende des Ventilkörpers 16.1 befestigt.

Fig. 3 zeigt die Stellung des Nebenventils 16, bei welcher Wasser in die Nebenkammer 12 läuft. Der Wasserfluss ist durch den in die Nebenkammer 12 weisenden Pfeil angedeutet. Fig. 6 zeigt dagegen die Stellung des Nebenventils 16, bei welcher Wasser aus der Nebenkammer 12 ablaufen kann. Das Ablaufen des Wassers aus der Nebenkammer 12 ist durch zwei Pfeile angedeutet.

Im geschlossenen Zustand des Ablaufventils 1 gemäß Fig. 3 entspricht der Wasserdruck in der Gehäusekammer (Hauptkammer) 11 dem Wasserdruck in der Nebenkammer 12. Die dem Wasserdruck in der Hauptkammer 11 ausgesetzte Fläche des tellerförmigen Abschnitts 7.1 des Ventilkörpers 7 ist dann deutlich kleiner als die dem Wasserdruck in der Nebenkammer 12 ausgesetzte Fläche des tellerförmigen Abschnitts 7.1 des Ventilkörpers. Somit verschließt der Ventilkörper 7 die durch den Ventilsitz 6 begrenzte Ablauföffnung 4 (Fig. 3).

Wird nun das Ablauf-Nebenventil 16.1 geöffnet, so fließt Wasser aus der Nebenkammer 12 über die Bypass-Leitung 17 ab. Dabei fällt der Wasserdruck in der Nebenkammer 12 gegenüber dem Wasserdruck in der Hauptkammer 11 ab. Der höhere Wasserdruck in der Hauptkammer 11 bewirkt ein Abheben des Ventilkörpers 7 vom Ventilsitz 6 verbunden mit einem Zusammendrücken des Faltenbalgs 13 (Fig. 6).

Die Bypass-Leitung 17 umfasst vorzugsweise zwei Rohrabschnitte 17.8, 17.9, die durch eine flüssigkeitsdichte Steckverbindung 26 miteinander verbunden werden bzw. sind. Ein erster Rohrabschnitt 17.8 der Bypass-Leitung 17 ist vorzugsweise einstückig oder stoffschlüssig mit dem oberen Gehäuseteil 2.2 des Ablaufventils 1 verbunden und enthält das Ablauf-Nebenventil 16. Der Rohrabschnitt 17.8 ist eingangsseitig mit einem Steckanschluss 27 versehen. Der zweite Rohrabschnitt 17.9 der Bypass-Leitung, welcher in das Ablaufrohrstück 8 mündet, ist mit dem unteren Gehäuseteil 2.1 verbunden. Die flüssigkeitsdichte Steckverbindung 26 umfasst einen muffenförmigen Anschluss, der an der Außenseite des zweiten Rohrabschnitts 17.9 ausgebildet bzw. angeformt ist. Die Rohrachsen der beiden Rohrabschnitte 17.8, 17.9 der Bypass-Leitung 17 verlaufen quer, vorzugsweise im Wesentlichen rechtwinklig zueinander.

Die Ausführung des erfindungsgemäßen Ablaufventils ist nicht auf das in der Zeichnung dargestellte Ausführungsbeispiel beschränkt. Vielmehr sind zahlreiche Varianten denkbar, die auch bei einer von dem Beispiel abweichenden Gestaltung von der in den Ansprüchen offenbarten Erfindung Gebrauch machen.

## Patentansprüche

1. Ablaufventil (1) für einen sanitären Spülkasten, insbesondere Unterputzspülkasten, mit einem eine Ablauföffnung (4) aufweisenden Ventilgehäuse (2), wobei die Ablauföffnung (4) durch einen Ventilsitz (6) begrenzt ist, und mit einem im geschlossenen Zustand des Ablaufventils auf dem Ventilsitz (6) dichtend aufliegenden Ventilkörper (7), und wobei der Ventilkörper (7) in einer Gehäusekammer (11) angeordnet ist, wobei der Ventilkörper (7) mit einer Nebenkammer (12) zur Aufnahme von Wasser versehen ist, deren Aufnahmevolumen für Wasser im geöffneten Zustand des Ablaufventils (1) kleiner ist als im geschlossenen Zustand des Ablaufventils (1), wobei die Nebenkammer (12) durch einen flexiblen und/oder beweglichen Wandabschnitt begrenzt ist, und wobei der Nebenkammer (12) ein Ablauf-Nebenventil (16) zugeordnet ist, welches in einer ersten Stellung ein Zufließen von Wasser in die Nebenkammer (12) und in einer zweiten Stellung ein Abfließen von Wasser aus der Nebenkammer (12) gestattet, **dadurch gekennzeichnet, dass** das Ventilgehäuse (2) die Gehäusekammer (11) zur Aufnahme von Wasser aufweist, wobei die Gehäusekammer (11) dem Ventilsitz (6) in Abflussrichtung vorgeordnet ist, wobei das Ventilgehäuse einen Anschlussstutzen aufweist, der ausgebildet ist, um das Ablaufventil an einen mit dem Spülkasten verbundenen Spülrohrstutzen oder an eine mit dem Spülkasten verbundene Spülrohrleitung anzuschließen, und dass der Ventilkörper (7) mit dem flexiblen und/oder beweglichen Wandabschnitt der Nebenkammer (12) verbunden ist.

2. Ablaufventil nach Anspruch 1, **dadurch gekennzeichnet, dass** der flexible und/oder bewegliche Wandabschnitt der Nebenkammer (12) in Form eines Faltenbalgs (13) ausgeführt ist.

3. Ablaufventil nach Anspruch 1 oder 2, **dadurch gekennzeichnet, dass** die Nebenkammer (12) teilweise durch einen kappenförmigen Gehäuseabschnitt (14) begrenzt ist.

4. Ablaufventil nach Anspruch 3, **dadurch gekennzeichnet, dass** der kappenförmige Gehäuseabschnitt (14) mit einem manschettenartigen Kragen (15) versehen ist.

5. Ablaufventil nach einem der Ansprüche 1 bis 4, **dadurch gekennzeichnet, dass** der Ventilkörper (7) einen Ventilschaft (7.3) aufweist, der in einer hülsenförmigen Aufnahme (14.2) verschiebbar geführt ist, die mit einem oberen Wandabschnitt der Nebenkammer (12) verbunden ist.

6. Ablaufventil nach Anspruch 5 in Verbindung mit Anspruch 3 oder 4, **dadurch gekennzeichnet, dass** die hülsenförmige Aufnahme (14.2) durch den kappenförmigen Gehäuseabschnitt (14) gehalten ist.

7. Ablaufventil nach einem der Ansprüche 1 bis 6, **dadurch gekennzeichnet, dass** der Ventilkörper (7) einen Randabschnitt (7.2) aufweist, der den Ventilsitz (6) seitlich überragt und im geschlossenen Zustand des Ablaufventils mit dem Boden der Gehäusekammer (11) einen Spalt (S) begrenzt.

8. Ablaufventil nach einem der Ansprüche 1 bis 7, **dadurch gekennzeichnet, dass** der Ventilkörper (7) eine Spülwasserumlenkfläche (7.4) aufweist, die im geschlossenen Zustand des Ablaufventils in die durch den Ventilsitz (6) begrenzte Ablauföffnung (4) hineinragt.

9. Ablaufventil nach einem der Ansprüche 1 bis 8, **dadurch gekennzeichnet, dass** das Ablauf-Nebenventil (16) in einer Bypass-Leitung (17) angeordnet ist, welche die vom Ventilsitz (6) begrenzte Ablauföffnung (4) überbrückt.

10. Ablaufventil nach Anspruch 9, **dadurch gekennzeichnet, dass** die Bypass-Leitung in ein Ablaufrohrstück (8) mündet, welches in Abflussrichtung auf den Ventilsitz (6) folgt.

11. Ablaufventil nach Anspruch 10, **dadurch gekennzeichnet, dass** das Ablaufrohrstück (8) einen Anschluss (10) für ein Überlaufrohr aufweist.

12. Ablaufventil nach Anspruch 9 oder 10, **dadurch gekennzeichnet, dass** die Bypass-Leitung (17) einen Anschluss für ein Überlaufrohr aufweist, der in Abflussrichtung auf das Ablauf-Nebenventil (16) folgt.

13. Ablaufventil nach einem der Ansprüche 1 bis 12, **dadurch gekennzeichnet, dass** das Ablauf-Nebenventil (16) einen schwenkbar gelagerten Ventilkörper (16.1) aufweist, der mit einer Magnetkupplung (21) versehen ist, deren sich wechselseitig anziehenden Kupplungselemente (22, 23) auf gegenüberliegenden Seiten einer Gehäusewand (17.7) eines geschlossenen Gehäuses, welches einen Aufnahmeraum (17.1) des schwenkbaren Ventilkörpers (16.1) begrenzt, angeordnet sind.

14. Ablaufventil nach einem der Ansprüche 1 bis 13, **dadurch gekennzeichnet, dass** der flexible und/oder bewegliche Wandabschnitt der Nebenkammer (12) mit einem oder mehreren sich mit bewegenden Stützringen (28) versehen, der oder die vorzugsweise an seiner Innenseite angeordnet sind.

## Claims

1. Drain valve (1) for a sanitary cistern, in particular a concealed cistern, having a valve housing (2) with a drain opening (4), the drain opening (4) being delimited by a valve seat (6), and a valve body (7), which rests in a sealing manner on the valve seat (6) in the closed state of the drain valve, and wherein the valve body (7) is arranged in a housing chamber (11), wherein the valve body (7) is provided with an auxiliary chamber (12) for receiving water, the receiving volume of which is smaller for water in the open state of the drain valve (1) than in the closed state of the drain valve (1), the auxiliary chamber (12) being delimited by a flexible and/or movable wall section, and wherein the auxiliary chamber (12) is associated with an auxiliary drain valve (16) which in a first position permits an inflow of water into the auxiliary chamber (12) and in a second position permits an outflow of water out of the auxiliary chamber (12), **characterised in that** the valve housing (2) comprises the housing chamber (11) for receiving water, the housing chamber (11) being arranged upstream of the valve seat (6) in the direction of flow, wherein the valve housing has a connecting piece which is designed to connect the drain valve (1) to a flushing pipe socket connected to the cistern or to a flushing pipe connected to the cistern, and **in that** the valve body (7) is connected with the flexible and/or movable wall section of the auxiliary chamber (12).

2. Drain valve according to claim 1, **characterised in that** the flexible and/or movable wall portion of the auxiliary chamber (12) is designed in the form of a bellows (13).

3. Drain valve according to claim 1 or 2, **characterised in that** the auxiliary chamber (12) is partially delimited by a cap-shaped housing portion (14).

4. Drain valve according to claim 3, **characterised in that** the cap-shaped housing portion (14) is provided with a collar (15) in the form of a sleeve.

5. Drain valve according to any one of claims 1 to 4, **characterised in that** the valve body (7) has a valve rod (7.3) which is displaceably guided in a sleeve-shaped receptacle (14.2) which is connected to an upper wall section of the auxiliary chamber (12).

6. Drain valve according to claim 5 in combination with claim 3 or 4, **characterised in that** the sleeve-shaped receptacle (14.2) is held by the cap-shaped housing portion (14).

7. Drain valve according to any one of claims 1 to 6, **characterised in that** the valve body (7) has an edge portion (7.2) which projects laterally beyond the valve seat (6) and, in the closed state of the drain valve, delimits a gap (S) with the bottom of the housing chamber (11).

8. Drain valve according to any one of claims 1 to 7, **characterised in that** the valve body (7) has a flushing water deflecting surface (7.4) which, in the closed state of the drain valve, projects into the drain opening (4) delimited by the valve seat (6).

9. Drain valve according to one of claims 1 to 8, **characterised in that** the auxiliary drain valve (16) is arranged in a bypass line (17) which bridges the drain opening (4) delimited by the valve seat (6).

10. Drain valve according to claim 9, **characterised in that** the bypass line opens into a drain pipe section (8) which follows the valve seat (6) in the direction of flow.

11. Drain valve according to claim 10, **characterised in that** the drain pipe section (8) has a connection (10) for an overflow pipe.

12. Drain valve according to claim 9 or 10, **characterised in that** the bypass line (17) has a connection for an overflow pipe which follows the auxiliary drain valve (16) in the direction of flow.

13. Drain valve according to any one of claims 1 to 12, **characterised in that** the auxiliary drain valve (16) has a pivotally mounted valve body (16.1) which is provided with a magnetic coupling (21) whose mutually attracting coupling elements (22, 23) are arranged on opposite sides of a housing wall (17.7) of a closed housing which delimits a receiving space (17.1) of the pivotable valve body (16.1).

14. Drain valve according to any one of claims 1 to 13, **characterised in that** the flexible and/or movable wall section of the auxiliary chamber (12) is provided with one or more support rings (28) which move with it and which are preferably arranged on its inner side.

## Revendications

1. Vanne de vidange (1) pour un réservoir de chasse d'eau sanitaire, notamment un réservoir de chasse d'eau encastré, avec un boîtier de vanne (2) présentant une ouverture de vidange (4), l'ouverture de vidange (4) étant délimitée par un siège de vanne (6), et avec un corps de vanne (7) reposant de manière étanche, à l'état fermé de la vanne de vidange, sur le siège de vanne (6), et le corps de vanne (7) étant agencé dans une chambre du boîtier (11), le corps de vanne (7) étant pourvu d'une chambre secondaire (12) pour collecter l'eau, dont le volume de collecte pour l'eau, à l'état ouvert de la vanne de vidange (1), est inférieur par rapport à l'état fermé de la vanne de vidange (1), la chambre secondaire (12) étant délimitée par une section de paroi flexible et/ou mobile, une vanne secondaire de vidange (16) étant associée à la chambre secondaire (12), cette vanne secondaire de vidange (16) permettant, dans une première position, un écoulement d'eau dans la chambre secondaire (12) et, dans une deuxième position, un écoulement d'eau hors de la chambre secondaire (12), **caractérisée en ce que** le boîtier de vanne (2) présente la chambre de boîtier (11) pour collecter l'eau, agencée en amont du siège de vanne (6) dans le sens d'écoulement, le boîtier de vanne présentant un manchon de raccordement, lequel est conçu de sorte à raccorder la vanne de vidange (1) à un embout de tuyau de chasse d'eau relié au réservoir de chasse d'eau ou à une conduite de tuyau de chasse d'eau reliée au réservoir de chasse d'eau et **en ce que** le corps de vanne (7) est relié à la section de paroi flexible et/ou mobile de la chambre secondaire (12).

2. Vanne de vidange selon la revendication 1, **caractérisée en ce que** la section de paroi flexible et/ou mobile de la chambre secondaire (12) est conçue en forme d'un soufflet (13).

3. Vanne de vidange selon la revendication 1 ou 2, **caractérisée en ce que** la chambre secondaire (12) est délimitée, partiellement, par une section de boîtier en forme de calotte (14).

4. Vanne de vidange selon la revendication 3, **caractérisée en ce que** la section de boîtier en forme de calotte (14) est pourvue d'une collerette de type manchette (15).

5. Vanne de vidange selon l'une des revendications 1 à 4, **caractérisée en ce que** le corps de vanne (7) présente une tige de vanne (7.3) étant guidée, de façon coulissante, dans un logement en forme de manchon (14.2) qui est relié à une section de paroi supérieure de la chambre secondaire (12).

6. Vanne de vidange selon la revendication 5 en relation avec la revendication 3 ou 4, **caractérisée en ce que** le logement en forme de manchon (14.2) est maintenu par la section de boîtier en forme de calotte (14).

7. Vanne de vidange selon l'une des revendications 1 à 6, **caractérisée en ce que** le corps de vanne (7) présente une section de bord (7.2) faisant saillie latéralement par rapport au siège de vanne (6) et délimitant, à l'état fermé de la vanne de vidange, avec le fond de la chambre de boîtier (11); une fente (S).

8. Vanne de vidange selon l'une des revendications 1 à 7, **caractérisée en ce que** lé corps de vanne (7) présente une surface de déviation d'eau de rinçage (7.4) qui pénètre, à l'état fermé de la vanne de vidange, dans l'ouverture de vidange (4) délimitée par le siège de vanne (6).

9. Vanne de vidange selon l'une des revendications 1 à 8, **caractérisée en ce que** la vanne secondaire de vidange (16) est agencée dans une conduite de by-pass (17) qui ponte l'ouverture de vidange (4) délimitée par le siège de vanne (6).

10. Vanne de vidange selon la revendication 9, **caractérisée en ce que** la conduite de by-pass débouche dans un morceau de tube de vidange (8), lequel se situe, dans le sens d'écoulement, après le siège de vanne (6).

11. Vanne de vidange selon la revendication 10, **caractérisée en ce que** le morceau de tube de vidange (8) présente un raccordement (10) pour un tube de trop-plein.

12. Vanne de vidange selon la revendication 9 ou 10, **caractérisée en ce que** la conduite de by-pass (17) présente un raccordement pour un tube de trop-plein qui est situé, dans le sens d'écoulement, après la vanne secondaire de vidange (16).

13. Vanne de vidange selon l'une des revendications 1 à 12, **caractérisée en ce que** la vanne secondaire de vidange (16) présente un corps de vanne agencé de manière pivotante (16.1) qui est pourvu d'un accouplement magnétique (21), dont les éléments d'accouplement (22, 23) s'attirant réciproquement sont agencés sur les côtés opposés d'une paroi de boîtier (17.7) d'un boîtier fermé, lequel délimite un espace de logement (17.1) du corps de vanne pivotant (16.1).

14. Vanne de vidange selon l'une des revendications 1 à 13, **caractérisée en ce que** la section de paroi flexible et/ou mobile de la chambre secondaire (12) est pourvue d'une ou plusieurs bagues de support (28) se déplaçant avec celle-ci, laquelle ou lesquelles est/sont agencée(s), de préférence, sur le côté intérieur.
